# EUROPEAN PATENT SPECIFICATION

(11) **EP 1 836 762 B1**
(45) Date of publication and mention of the grant of the patent: **02.03.2011**
(21) Application number: 05856246.3
(22) Date of filing: 22.12.2005
(51) Int. Cl.: H02M 7/06

(54) **ENHANCING THE EFFICIENCY OF AC-DC LOW VOLTAGE POWER SUPPLIES BY TOPOLOGICAL MODIFICATIONS**
ERHÖHUNG DES WIRKUNGSGRADS VON WECHSELSTROM-/GLEICHSTROMNIEDRIGSPANNUNGSVERSORGUNGEN DURCH TOPOLOGISCHE MODIFIKATIONEN
AMELIORATIONS APPORTEES A DES ALIMENTATIONS ELECTRIQUES

(30) Priority: 22.12.2004 GB 0428052
(43) Date of publication of application: 26.09.2007
(73) Proprietor: Landis+Gyr AG, 6300 Zug (CH); Landis+Gyr Limited, Stockport Cheshire SK3 0RT (GB)
(72) Inventor: Paxton-White, Michael, HX6 4NY Yorkshire (GB); Harrison, Leigh, Sale Cheshire M 33 6LL (GB)
(74) Representative: Rentsch & Partner
(86) International application number: PCT/IB2005/003873
(87) International publication number: WO 2006/070254

(56) References cited:
- EP-A- 0 688 091
- GB-A- 1 599 757
- US-A1- 2004 240 242

## Description

### Field of Invention

The present invention relates to improvements in or relating to power supplies, and more particularly, although not exclusively, relates to power supplies for utility meters such as power supplies that are commonly used in electricity meters.

### Background to the Invention

In order to operate a low voltage electrical component from a mains voltage power supply, such as an electricity meter, the alternating current (AC) mains voltage must first be converted to direct current (DC). It is common practice in low cost power supplies to make use of a very simple arrangement of components to reduce the high AC voltage to a lower useable DC voltage, such systems operating in a half wave rectification mode to reduce the circuit component numbers.

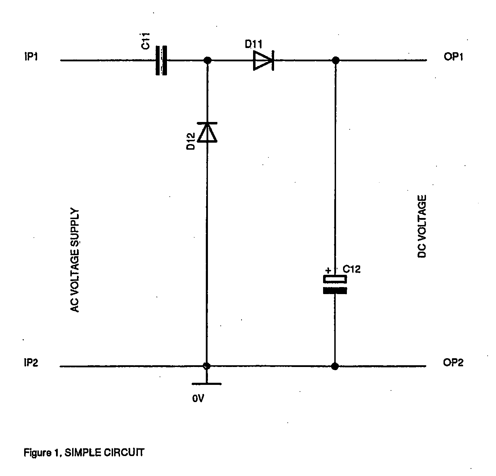

Figure 1 shows a simple circuit wherein a capacitor is selected such that it has an impedance at the AC voltage frequency that can be used to reduce the AC voltage frequency, whereby the effective AC voltage is reduced. Specifically, a first capacitor C11 has a value chosen such that its impedance at the supply voltage frequency will reduce the supply voltage. During the positive half cycle of the AC waveform, a first diode D11 conducts and allows current to flow to charge up the first capacitor C11. A DC voltage is thereby developed across the first capacitor C11, which can be used for a DC load. During the subsequent negative half cycle, a second diode D12 conducts and removes the charge from the first capacitor C11, so that it can again be used during the next positive half cycle. Whilst this provides the basis for a very simple DC supply, where only a single positive DC voltage rail is provided, it is important to realize that during the negative half cycle, all energy flowing through the second diode D12 is effectively wasted and cannot provide any form of useful energy to enable operation of the electronics of a low voltage circuit Accordingly, apart from any intrinsic heat wastage through circuit components, there is automatically a sub-50% level of efficiency within the circuitry.

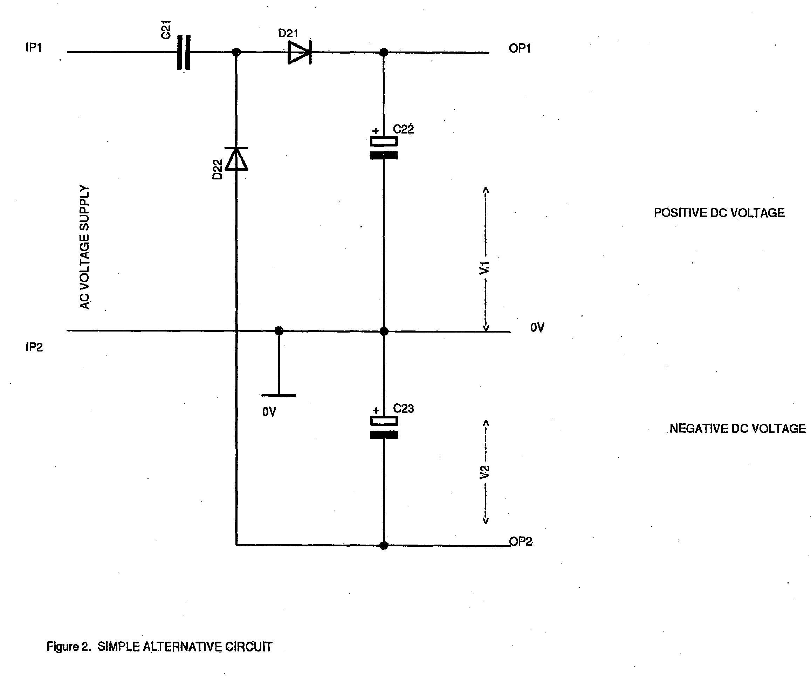

It is possible to make use of the power in the negative half cycle and this is commonly demonstrated in circuits that have a 'split' or positive and negative DC power supply rails. Figure 2 shows a simple alternative circuit where two DC voltages are developed; additional to the circuit components of Figure 1, a third capacitor C23 is connected to a second diode D22. During the negative half cycle of the AC supply voltage, the current flow through the second diode D22 removes charge from the third capacitor C23 and causes a negative DC voltage to be developed across the third capacitor, C23. However, if the remainder of the electronic circuitry cannot be configured so that it operates from a split rail DC supply, then the use of this circuit topology is not appropriate. To address such an inherent inefficiency, simple full wave rectification circuits have been developed. This can be conventionally accomplished by passing the mains voltage AC input to a full wave bridge rectifier, smoothing the output with, for example, an electrolytic capacitor, and then regulating the output voltage with, for example, a zener diode. Whilst this technique works reasonably well with a filament transformer and the like, it is either highly inefficient or is incapable of providing adequate power for many low power circuits.

The documents GB 1 599 757 A, US 2004/0240242 A1 and EP0 688 091 A disclose AC to DC power supply circuits.

Notwithstanding the above, one problem associated with conventional full wave bridge rectification of incoming alternating current is that considerable amounts of heat can be generated. This extra heat generated flows to the rest of the circuit through conduction within components such as the leads thereof, and, where space permits, through convection. Not only does the heat affect other components, it also indicates that the bridge rectifier is wasting energy. Component life can also be reduced.

Another consideration to be taken into account is the fact that a voltage drop across the diodes of a conventional bridge rectifier also reduces the output voltage available to drive a low voltage circuit such as a utility meter measuring circuit Utility meter measuring circuits are typically situated within the confines of a small enclosure: wherein excess heat generated by a conventional bridge rectifier circuit can also affect normal operation. Utility meter measuring circuits are rated for operation at a specific ambient temperature and current If they are operated at higher than their typical temperature, the utility meter accuracy may be compromised. Furthermore, operating any equipment at other than its rated temperature will have an effect on it is operating longevity.

### Object of the Invention

It is therefore an object of the present invention to provide an improved DC low voltage power supply.

It is also an object of the present invention to provide an increased efficiency DC low voltage power supply.

In another aspect, the present invention seeks to address a need to increase an amount of available electrical energy to operate low voltage circuit requirements of an electricity meter without increasing the energy taken from the mains voltage.

### Statement of Invention

The present invention provides a power supply circuit accordance to claim 1. Preferred embodiments are defined in the dependent claims.

In accordance with a first aspect of the invention, there is provided a power supply circuit for the conversion of mains alternating current voltage received at first and second input terminals to provide a direct current voltage at first and second output terminals, the first input terminal having a first capacitor coupled in series with a first diode and connected thereto by an output voltage rail to the first output terminal; the second input terminal being coupled to a common voltage rail, which rail is connected to the second output terminal; wherein an inductor in series with a second diode couples the common voltage rail to a node between the first capacitor and the first diode on the output voltage rail and the inductor couples with an input of a third diode in series, the third diode being connected to an output of the first diode; and wherein a second capacitor couples the common voltage rail to an output of the third diode; whereby a DC reduced voltage output is provided between the first output terminal and the second output terminal.

A switch can be placed between the inductor and second diode, the switch being operable to pulse the signal through the inductor from the earth voltage line. This switch is conveniently fabricated as a transistor based switch and can receive DC pulses from a signal generator, whereby truncated pulses can be output from the inductor. The switch transistor can be a FET or BJT transistor.

In accordance with a further aspect of the invention, there is provided a method of operating a power supply made in accordance with the invention.

In accordance with a still further aspect of the invention, there is provided a utility meter comprising a power supply made in accordance with the invention.

In accordance with another aspect of the invention there is provided an electricity meter having a power supply, as described above, and wherein the power supply connects directly to metered mains voltage supply.

An advantage arising form the increase in efficiency, as provided by the present invention, is that there is a reduction in the amount of energy taken from the mains AC voltage supply while maintaining the same low DC voltage supply available for use within the meter.

A further advantage arises from a reduction in the power consumption of the electronic circuitry within the meter is that there is a cumulative environmental impact given that, whilst only small savings in the power consumption are made per meter, this could add up to a large energy saving when viewed over a large installed population.

This invention is particularly advantageous to the manufacture of low cost electricity meters where the material cost of the power supplies has to be kept to a minimum.

### Brief Description of the Figures

For a better understanding of the present invention, reference will now be made, by way of example only, to the Figures as shown in the accompanying drawing sheets, wherein:
Figure 1 illustrates a first prior art DC voltage supply;
Figure 2 illustrates a second prior art DC voltage supply;
Figure 3 illustrates a first power supply, made in accordance with the present invention;
Figure 4 represents a second power supply, made in accordance with the present invention; and
Figure 5 shows actual values of duty cycle versus AC input voltage obtained for a constant 10mA load DC output.

### Detailed description of the Preferred Embodiments

There will now be described, by way of example only, the best mode contemplated by the inventor for carrying out the present invention. In the following description, numerous specific details are set out in order to provide a complete understanding to the present invention.

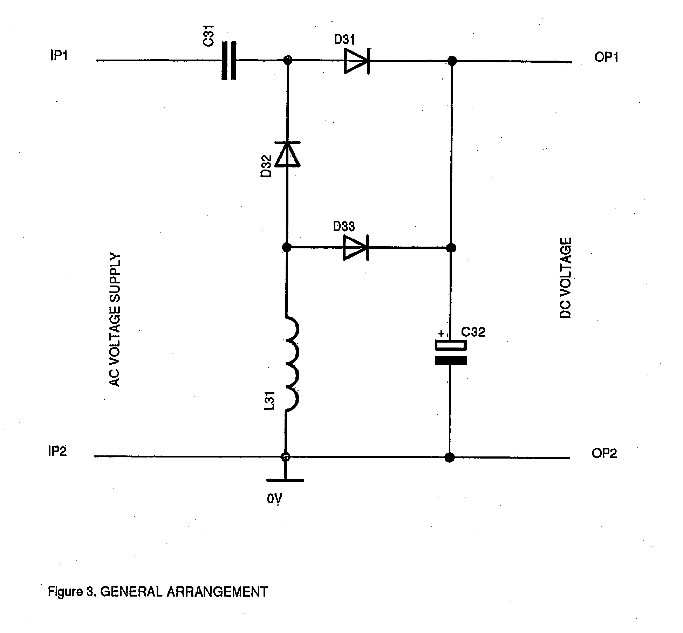

With reference to Figure 3, there is shown a first embodiment of the invention. In this circuit, a first capacitor C31 is used with a first diode D31 and second capacitor C32 to form a DC voltage supply. Second diode D32 is configured in the circuit so that it will conduct during the negative half-cycle such that the circuit operates in similar fashion to the circuit shown with reference to Figure 1. During the negative half-cycle, current from second diode D32 flows through inductor L31 storing energy, which is released via a third diode D33 when second diode D32 is non-conducting in the positive half-cycle of the AC mains supply. The second capacitor C32 is therefore not only charged during the positive half-cycle from first diode D1 but is additionally charged due to energy being released by inductor L31 via third diode D3.

One constraint imposed by the above circuit is that the inductor L31 is a relatively large circuit component in order for the circuit to operate at AC supply frequency (50-60Hz). Furthermore, the expense of such a component may also be viewed as being disproportionate in relation to the circuit as a whole.

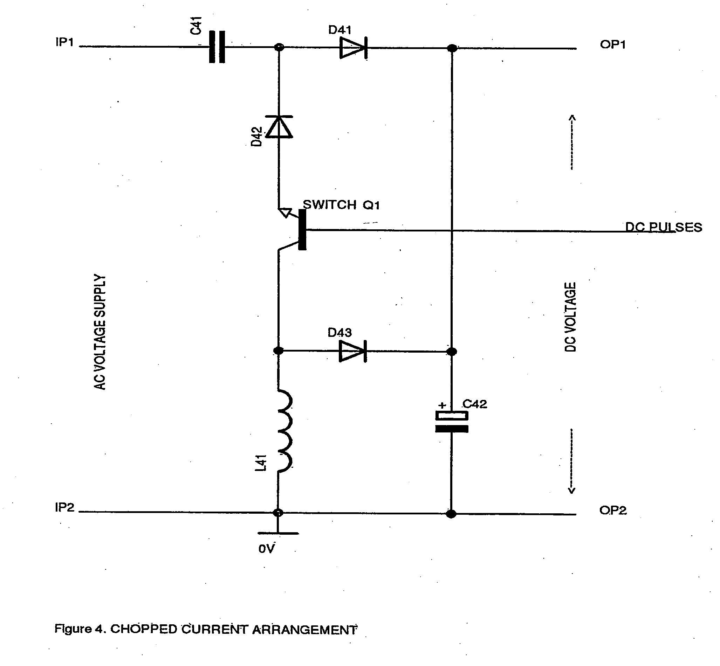

Referring now to Figure 4, a further embodiment of the invention is shown. The size and cost of a conductor can be considerably reduced if the current is pulsed or "chopped". This may be achieved by a switching device Q1 which is pulsed from an external source. In this circuit as described above, the first capacitor C41 is used with first diode D41 and second capacitor C42 to form a DC voltage. Second diode D42 is configured in the circuit so that it will conduct during the negative half-cycle as discussed above in relation to the circuit of Figure 1. The switching device, in this case a transistor, Q1 is arranged such that it conducts in a normal state. The signal source can be either an oscillator or an output port from the microcontroller with appropriate level-shifting.

When the negative half-cycle current from second diode D42 flows through inductor L41 and transistor Q1, initially the circuit functions exactly as Figure 1 with the loss of negative half-cycle of the AC supply. However, when high frequency pulses are then applied to the switching device Q1, the switching device turns off and on and consequently "chops" the current flowing through the inductor L41. The stored energy in inductor L41 is thereby released via third diode D43 when transistor Q1 is in a non-conducting state during the negative half-cycle of the AC mains supply, whereby second capacitor C42 is not only charged during the positive half-cycle of the AC mains supply from first diode D41 but is also additionally charged due to the pulses of energy released by inductor L41 and transistor Q1 via third diode D43 during the negative AC mains supply cycle.

Chosen values for experimentation, which have been shown to perform well, are as follows:
C41 - 330nF
D42, D42 -1000 PIV, 1 A
D43-100V PIV fast switching diode (e.g. BAS16 etc.)
Q1 - BC846 NPN bipolar junction transistor
L41 - 47mH
C42 - 470µF
DC Pulses- 5 kHz PWM signal (pulse-width varies, dependent upon load current).

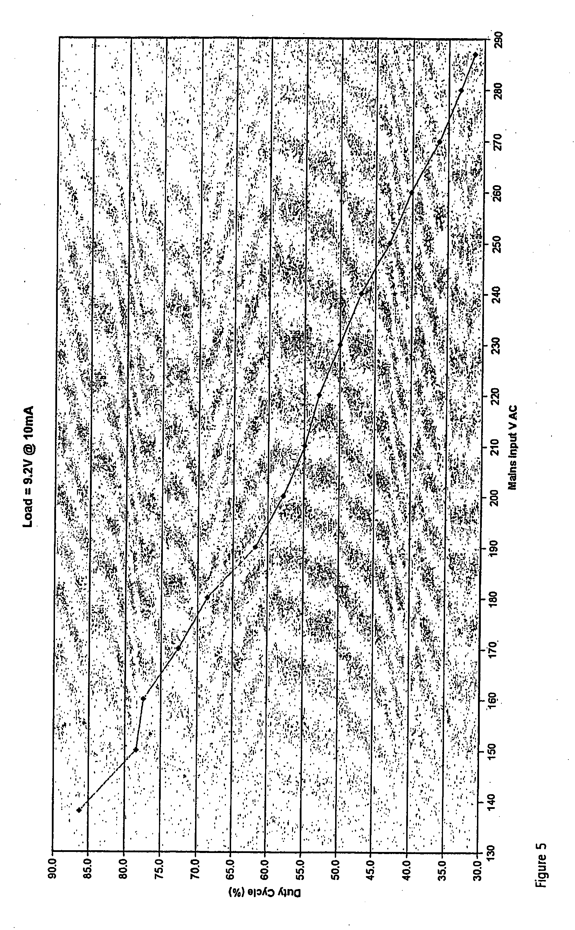

Figure 5 shows the actual values for duty cycle versus the AC input voltage obtained for a constant 10mA load and 9.2V DC output Measurements (simulated) have been taken with respect to the standard circuit shown in Figure 1 gave 6mA load current maximum for 230VAC input and 3mA max for 138VAC input for a 10V DC output for both cases. Simulation results indicate that for a 138V AC input without the current boost, the power supply will deliver 3mA at 10V DC and when current boost is enabled, it will deliver 10mA at 10V DC. That is to say a three-fold increase in output power can be realised. It will be appreciated that this has a significant impact upon the overall efficiency of the circuit

Although the specific embodiments above have been described in relation to a power supply for a utility meter, it will be appreciated that the same of circuit is equally applicable to many other low voltage circuits, where the use of electrical cells is inconvenient or that there is a more readily accessible mains electrical supply.

## Claims

1. A power supply circuit for the conversion of mains alternating current voltage received at first and second input terminals (IP1,IP2) to provide a direct current voltage at first and second output terminals (OP1,OP2) whereby a DC voltage is provided between the first output terminal and the second output terminal,
the first input terminal (IP1) having a first capacitor (C31) coupled in series with a first diode (D31) and connected thereto by an output voltage rail to the first output
terminal (OP1);
the second input terminal (IP2) being coupled to a common voltage rail, which rail is connected to the second output terminal (OP2);
wherein an inductor (L31) couples in series with a second diode (D32) the common voltage rail to a node between the first capacitor (C31) and the first diode (D31) on the output voltage rail inductor **characterized in that** (L31) couples with an input of a third diode (D33) in series, the third diode (D33) being connected to an output of the first diode (D31); and
wherein a second capacitor (C32) couples the common voltage rail to an output of the third diode (D33).

2. A power supply according to claim one, wherein a switch (Q1) is placed between the inductor (L41) and the second diode (D42), the switch being operable to pulse the signal through the inductor (L41) from the common voltage rail.

3. A power supply according to claim two wherein the switch is a transistor and receives DC pulses from a signal generator, whereby truncated pulses can be output from the inductor (L41 ).

4. A power supply according to claim three, wherein the switch is a transistor switch selected from a set including BJT and FET transistors.

5. A utility meter comprising a power supply according to any one of claims one to four.

6. A utility meter, according to claim five, wherein the utility is electricity and the power supply connects directly to metered mains voltage supply.

7. A utility meter, according to claim five, wherein the utility is gas and the power supply of the meter connects with a mains supply voltage.

## Patentansprüche

1. Leistungsversorgungsschaltung für die Umsetzung der Versorgungsnetz-Wechselspannung, die an einem ersten und einem zweiten Eingangsanschluss (IP1, IP2) empfangen wird, um an einem ersten und einem zweiten Ausgangsanschluss (OP1, OP2) eine Gleichspannung bereitzustellen, wobei zwischen dem ersten Ausgangsanschluss und dem zweiten Ausgangsanschluss eine Gleichspannung bereitgestellt wird,
wobei der erste Eingangsanschluss (IP1) einen ersten Kondensator (C31) besitzt, der mit einer ersten Diode (D31) in Reihe geschaltet ist, und damit über eine Ausgangsspannungsschiene mit dem ersten Ausgangsanschluss (OP1) verbunden ist;
wobei der zweite Eingangsanschluss (IP2) mit einer gemeinsamen Spannungsschiene gekoppelt ist, wobei die Schiene mit dem zweiten Ausgangsanschluss (OP2) verbunden ist;
wobei ein Induktor (L31) in Reihe mit einer zweiten Diode (D32) die gemeinsame Spannungsschiene mit einem Knoten zwischen dem ersten Kondensator (C31) und der ersten Diode (D31) auf der Ausgangsspannungsschiene koppelt, **dadurch gekennzeichnet, dass** der Induktor (L31) mit einem Eingang einer dritten Diode (D33) in Reihe geschaltet ist, wobei die dritte Diode (D33) mit einem Ausgang der ersten Diode (D31) verbunden ist; und
wobei ein zweiter Kondensator (C32) die gemeinsame Spannungsschiene mit einem Ausgang der dritten Diode (D33) koppelt.

2. Leistungsversorgung nach Anspruch 1, wobei zwischen dem Induktor (L41) und der zweiten Diode (D42) ein Schalter (Q1) angeordnet ist, wobei der Schalter betätigbar ist, um das Signal durch den Induktor (L41) von der gemeinsamen Spannungsschiene impulsförmig zu machen.

3. Leistungsversorgung nach Anspruch 2, wobei der Schalter ein Transistor ist und Gleichspannungsimpulse von einem Signalgenerator empfängt, wodurch von dem Induktor (L41) zerhackte Impulse ausgegeben werden können.

4. Leistungsversorgung nach Anspruch 3, wobei der Schalter ein Transistorschalter ist, der aus einer Gruppe gewählt ist, die BJT- und FET-Transistoren enthält.

5. Verbrauchszähler, der eine Leistungsversorgung nach einem der Ansprüche 1 bis 4 enthält.

6. Verbrauchszähler nach Anspruch 5, wobei der Verbrauch Elektrizität ist und die Leistungsversorgung direkt mit der gemessenen Netzspannungsversorgung verbunden ist.

7. Verbrauchszähler nach Anspruch 5, wobei der Verbrauch Gas ist und die Leistungsversorgung des Zählers mit einer Netzspannungsversorgung verbunden ist.

## Revendications

1. Circuit d'alimentation électrique pour la conversion de tension de courant alternatif du secteur reçu au niveaux de première et seconde bornes d'entrée (IP1, IP2) pour fournir une tension de courant continu à des première et seconde bornes de sortie (OP1, OP2), une tension CC étant appliquée entre la première borne de sortie et la seconde borne de sortie ;
la première borne d'entrée (IP1) ayant un premier condensateur (C31) couplé en série à une première diode (D31) et connecté à elle par un rail de tension de sortie allié à la première borne de sortie (OP1) ;
la seconde borne d'entrée (IP2) étant couplée à un rail de tension commun connecté à la seconde borne de sortie (OP2) ;
dans lequel une bobine d'induction (L31) couple, en série avec une seconde diode (D32), le rail de tension commun à un noeud disposé entre le premier condensateur (C31) et la première diode (D31) sur le rail de tension de sortie (L31), **caractérisé en ce que** la bobine d'induction est couplée à une entrée d'une troisième diode (D33) en série, la troisième diode (D33) étant connectée à une sortie de la première diode (D31) ; et dans lequel un second condensateur (C32) couple le rail de tension commun à une sortie de la troisième diode.

2. Alimentation électrique selon la revendication un, dans lequel un commutateur (Q1) est placé entre la bobine d'induction (L41) et la seconde diode (D42), le commutateur pouvant être actionné pour donner l'impulsion de signal à travers la bobine d'induction (L41) à partir du rail de tension commun.

3. Alimentation électrique selon la revendication deux, dans lequel le commutateur est un transistor et reçoit des impulsions de CC en provenance d'un générateur de signaux, les impulsions tronquées pouvant être sorties de la bobine d'induction (L41).

4. Alimentation électrique selon la revendication trois, dans lequel le commutateur est un commutateur de transistor sélectionné dans le groupe constitué les transistors BJT et FET.

5. Compteur d'installation comprenant une alimentation électrique selon l'une quelconque des revendications un à quatre.

6. Compteur d'installation selon la revendication cinq, dans lequel le service est l'électricité et l'alimentation électrique est directement reliée à l'alimentation en tension du secteur mesurée.

7. Compteur d'installation, selon la revendication cinq, dans lequel le service est le gaz et l'alimentation électrique du compteur est reliée à une tension d'alimentation du secteur.
